# EUROPEAN PATENT APPLICATION

(11) **EP 4 530 831 A1**
(43) Date of publication of application: **02.04.2025**
(21) Application number: 23200241.0
(22) Date of filing: 27.09.2023
(51) Int. Cl.: G06F 8/65, G06F 8/71

(54) **PRINTED CIRCUIT BOARD**

(71) Applicant: Otis Elevator Company, Farmington, Connecticut 06032 (US)
(72) Inventor: PFEFFER, Axel Steffen, 13507 Berlin (DE)
(74) Representative: Dehns

(57) **Abstract**

A printed circuit board (100) with an electronic display (102) wherein the printed circuit board (100) is arranged to provide version information to the electronic display (102); and wherein the electronic display (102) is arranged to receive and display the version information.

## Description

### Technical field

This disclosure relates to printed circuit boards and in some particular examples to printed circuit boards in passenger conveyors.

### Background

Traditionally, printed circuit boards are labelled with printed labels, e.g. adhesive paper labels. These labels may include a part number, which may comprise the hardware version of the printed circuit board. Such printed labels may also include software version information of software loaded onto the printed circuit board.

Each time the printed circuit board is updated, for example every time the hardware or software is updated, the label is amended or a new label is applied.

In various industries, especially where safety is an important factor, routine inspection of equipment is performed. This can include verifying that certain hardware and/or software is up to date, for example that it is of an appropriate version.

### Summary

According to a first aspect, the present disclosure provides a printed circuit board having an electronic display; wherein the electronic display is electrically connected to the printed circuit board; wherein the printed circuit board comprises at least one component having version information associated with the printed circuit board stored thereon; wherein the printed circuit board is arranged to provide the version information to the electronic display; and wherein the electronic display is arranged to receive and display the version information.

With such an arrangement, the version information that is displayed on the board is stored on the board. This can provide a number of advantages compared with previous systems.

For example, in previous systems with paper labels, even in a controlled environment such as a manufacturing facility, it is possible for human error to result in the printed labels not having the correct version numbers for the printed circuit boards to which they are attached. Further, once installed at a customer site, maintaining accurate labelling of a printed circuit board becomes significantly more challenging. For example, in cases where software can be remotely updated, a site visit by a technician may still be necessary to ensure that a paper label on the printed circuit board displays an accurate and up-to-date software version. In such cases there may be a delay between the software update and the next site visit (and consequent paper label update), during which period the paper label is out of date and inaccurate. In another example, a site technician may not realise, prior to a visit, that hardware and/or software updates for various printed circuit boards are necessary. Therefore, the site technician may not have the necessary paper labels to update the information displayed on the printed circuit boards when the updates are carried out.

By contrast, with the printed circuit board according to this disclosure, the version information can easily and reliably be programmed or loaded onto the printed circuit board at the time of manufacture (especially in the case of hardware information) or at the time of commissioning (especially in the case of software information) such that the version information is reliably correct at the time of manufacture/installation. Further, the version information can be updated and/or corrected by numerous methods and the electronic display can always display the correct information. Particularly advantageously, updates may be made remotely and the version information displayed on the printed circuit board can be updated without a site visit.

The version information associated with the printed circuit board may comprise, for example, a version of: a component of the printed circuit board; a plurality of components of the printed circuit board; the printed circuit board itself, i.e. the bare board prior to the mounting of components; or the printed circuit board as a whole, i.e. having at least one component mounted on it.

In some examples, the electronic display may comprise a liquid-crystal display (LCD), a light-emitting diode (LED) display or the like. In some examples, the electronic display comprises electronic paper. Electronic paper (also referred to as "e-paper", "e-ink" or "intelligent paper") is generally very low power as it is designed to reflect ambient light rather than emit light itself. Many electronic paper displays can hold a static display indefinitely without the application of electricity. Such a display may display the version associated with the printed circuit board even when the display (or even the printed circuit board) is not powered. This is particularly useful to ensure that powering up of a board is not necessary to determine its version information. For example, printed circuit boards in storage or in a manufacturing facility can still be checked to verify appropriate version information before the printed circuit board is dispatched for installation. Additionally, in the case of inspections (e.g. safety inspections), it may be necessary or desirable to turn off power while the printed circuit board is inspected. With static display electronic paper, the version information is still visible and can be checked and/or verified in the absence of power in the same way as a paper label would have been. However, with the electronic paper, the version information can be amended or updated without a site visit and without the need to apply a new label.

Electronic paper comes in many different forms and may use various technologies. Examples include: Gyricon displays (using bichromal Janus particles), electrophoretic displays, electrowetting displays, interferometric displays, and plasmonic displays. Some of these may require low power to maintain a display, in which case a small (e.g. coin-cell) battery may be provided on the printed circuit board to provide independent power to the display. However, as noted above, the electronic display ideally holds a static display without application of power. Such displays typically use bi-stable particles which can be transitioned between their two states by application of power (e.g. an electric field for charged particles). As each state is stable, no power is required to maintain it. Each state typically represent a different colour (e.g. black in one state, white in the other).

In some examples, the version information comprises hardware version information associated with the printed circuit board. It may be necessary to check the hardware version of a printed circuit board, for example before shipping a printed circuit board to a customer. An electronic display may allow such a check to be performed, while ensuring that the information provided is accurate and up-to-date.

In some examples, the version information comprises software version information associated with the printed circuit board. Printed circuit boards may have software associated with them for various reasons. For example, a printed circuit board may have one or more processors running software to carry out certain functions of the printed circuit board. The printed circuit board may have firmware or drivers for controlling certain hardware on the board. A printed circuit board may have a single item of software (with associated version information) or it may have several items of software (each with its own associated version information). All version information may be transferred to and displayed on the electronic display. Software may be installed on the printed circuit board at the time of manufacture or it may be loaded later, for example at a time of commissioning the board in a system so that it has the latest software. Software may also be updated when new versions become available. When software is updated, there will be updated version information for that software. For example, updates installed during a visit by a technician to a customer's site may result in the software version information being updated. As the version information is provided to the electronic display by the printed circuit board, there is no need for the technician to update or apply a new printed label.

In some examples, the version information associated with the printed circuit board is stored in persistent memory. Persistent memory may be defined as memory that retains information stored therein in the absence of power. Therefore, persistent memory may enable the version information associated with the printed circuit board to be maintained even when power to the printed circuit board is lost, or not available.

Although the version information associated with the printed circuit board can, in some examples, be stored in read-only memory, updating such version information would require a component of the printed circuit board to be replaced. Therefore, in other examples, the version information associated with the printed circuit board may be stored in re-writable memory. Re-writable memory may be defined as memory that can be overwritten, for example an erasable programmable read-only memory (EPROM) or flash memory. This enables updates of the version information without requiring the replacement of a component. It will of course be appreciated that any software may also be stored in such memory. Software may be stored together with its version information or the version information may be stored separately from the software and updated at the same time as the software is updated.

In some examples, the printed circuit board is arranged to receive a software update including updated software version information. For example, the software version information associated with the printed circuit board may be updated by replacing a component on the printed circuit board with a component having updated software version information, or new software version information may be loaded into an existing component of the printed circuit board. As the printed circuit board is arranged to provide the software version information to the electronic display, software updates may be applied while ensuring that the electronic display continues to display up-to-date software version information.

In some examples, the printed circuit board further comprises a communications module arranged to receive the software update over a network. For example, the communications module may be arranged to receive the software update over a local network (for example, via ethernet, WiFi, Bluetooth, etc.). The update may be received from a locally networked computer or it may be received from a computer remote from the site (e.g. over a wide area network or the internet). This may enable remote updates to the software (and likewise the software version information). As the printed circuit board is arranged to provide the software version information to the electronic display, software updates may be applied remotely from the printed circuit board (and optionally also remote to the site at which the printed circuit board is located), while the electronic display continues to display an up-to-date software version. Remote software updates performed without a site visit by a technician can thus still result in up-to-date version information displayed on the printed circuit board.

In some examples, the printed circuit board is arranged to provide the version information to the electronic display periodically, for example once per minute, once per hour, once per day, etc.. Providing the version information to the display periodically ensures that a single failure in the display update mechanism does not persist too long as a further update of the display will occur after the period elapses. For example, if the display becomes corrupted for some reason, then the next periodic update will refresh the display to show the correct version information. In some examples, the printed circuit board is arranged to provide the version information to the electronic display in response to an update of the version information associated with the printed circuit board. This may be useful to confirm that a version update has been successful immediately after applying the update (for example, without waiting for a periodic update as described above). This minimises the period of inaccuracy of the display.

In some examples, the printed circuit board is arranged to provide to the electronic display a date and/or time of when the version information became associated with (for example, was applied to or installed on) the printed circuit board; and the electronic display is arranged to receive and display the date and/or time of when the version information became associated with the printed circuit board. This additional information may provide a further indication of how up-to-date the printed circuit board is as it indicates how long it has been since the last update. A date and/or time may be more immediately indicative of a likely need to update the printed circuit board without having to check what the latest version is. For example, if the version information has not been updated for an extended time period, this may be indicative that an update is required.

In some examples, the electronic display is arranged to display a date and/or time of when the version information associated with the printed circuit board was last received from the printed circuit board. This may provide an indication of whether the electronic display and/or the printed circuit board is functioning correctly, for example whether the connection between the electronic display and the printed circuit board is operating correctly. This date and/or time indicates how long it has been since the electronic display was refreshed. This may be useful, for example, if the electronic display comprises electronic paper which is able to hold static text and images indefinitely without electricity. The electronic paper may otherwise display out-dated version information of the printed circuit board without providing any indication that this information may be incorrect. This may be particularly useful where the printed circuit board is arranged to provide the version information to the electronic display periodically. For example, if the last refresh date is older than one refresh period, then anyone inspecting the board can infer that the version information may be unreliable.

In some examples, the printed circuit board is a safety critical printed circuit board. Safety critical boards may need regular safety inspection to verify that the system is safe, for example to provide safety certification. The examples of the present disclosure facilitate such inspection by ensuring that reliable information is provided for easy visual inspection. For example, the printed circuit board may be for controlling various safety systems such as brakes or emergency communications.

In some examples, the printed circuit board is a printed circuit board of a passenger conveyor system. In particular, the passenger conveyor systems may be an elevator system, an escalator system or a moving walkway. It may be routine, or necessary, to inspect the printed circuit boards in passenger conveyor systems to ensure that they are up-to-date.

In some examples, the printed circuit board is a passenger conveyor system active safety control system printed circuit board. An active safety control system of an elevator typically consists of several boards in communication with one another. These boards may be positioned, for example, in the elevator car, the elevator pit and/or at the elevator controller. It is typical for the elevator certificate to state a specific hardware and software version for each of these boards, which must be verified when the elevator system is inspected.

According to a second aspect, the present disclosure provides a passenger conveyor system comprising a printed circuit board having an electronic display; wherein the electronic display is electrically connected to the printed circuit board; wherein the printed circuit board comprises at least one component having version information associated with the printed circuit board stored thereon; wherein the printed circuit board is arranged to provide the version information to the electronic display; and wherein the electronic display is arranged to receive and display the version information.

The printed circuit board may include any of the optional features provided in any of the previous examples of printed circuit boards according to the first aspect of the invention.

In some examples, the passenger conveyor system further comprises a control cabinet; wherein the control cabinet comprises a second electronic display; wherein the printed circuit board is arranged to provide the version information to the second electronic display; and wherein the second electronic display is arranged to receive and display the version information. A cabinet comprising an electronic system display may be particularly convenient for inspecting the version information of a printed circuit board without inspecting the printed circuit board directly. For example, if the printed circuit board is located in an inaccessible position, it may be difficult to inspect the electronic display on the printed circuit board itself, but it may be sufficient to meet inspection requirements to inspect the second electronic display on the cabinet. The date and/or time features discussed above may in particular be useful on the second electronic display for verifying that the information is being reliably updated as expected.

In some examples, the passenger conveyor system comprises a plurality of printed circuit boards; wherein each of the plurality of printed circuit boards is arranged to provide respective version information to the second electronic display; and wherein the second electronic display is arranged to receive and display each of the respective version informations. This may be particularly convenient for inspecting whether the version informations of each of a plurality of printed circuit boards is up-to-date without needing to inspect each printed circuit board individually. This may save time, for example, where the plurality of printed circuit boards are each located in different places. For example, in an elevator system, printed circuit boards may be located on the elevator car, at the traction machine and in the hoistway pit.

In some examples, the second electronic display comprises electronic paper as discussed above for the electronic display on the printed circuit board. This may be particularly convenient if the power to the system is turned off, for example, for maintenance or during the inspection procedure.

In some examples, each of the plurality of printed circuit boards is arranged to provide to the electronic display a date and/or time of when the respective version information became associated with (for example, was applied to or installed on) the respective printed circuit board; and the second electronic display is arranged to receive and display the date and/or time of when each of the respective version informations became associated with the respective printed circuit board.

In some examples, the second electronic display is arranged to display a date and/or time of when the respective version informations was last received from the respective printed circuit board.

### Brief description of drawings

One or more non-limiting examples will now be described, by way of example only, and with reference to the accompanying drawings in which:
Figure 1 shows a printed circuit board having an electronic display;
Figure 2 shows an elevator system comprising a plurality of printed circuit boards; and
Figure 3 shows an elevator cabinet comprising an electronic system display.

### Detailed description

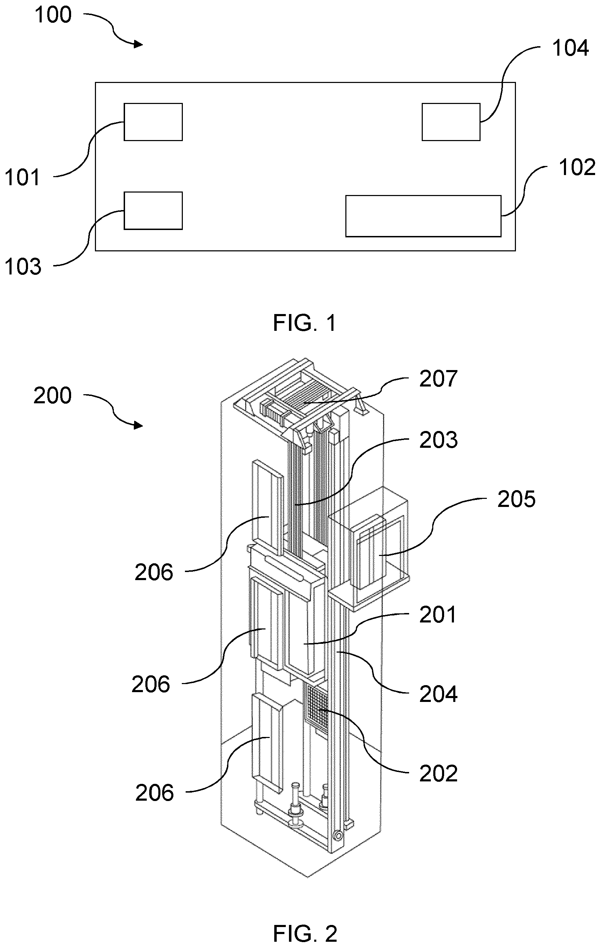

Figure 1 shows a printed circuit board (PCB) 100 comprising a component 101 having a memory. Version information of the PCB 100 is stored in the memory of the component 101. The version information includes software version information and hardware version information of the PCB 100. It will be appreciated that for some PCBs 100 only software version information or only hardware version information may be stored as necessary.

The PCB 100 also includes an electronic display 102. In this example the electronic display 102 is an electronic paper display which can maintain a static display in the absence of power. In other examples, other forms of electronic paper may be used (with an independent power source such as a coin cell if required) or an LCD or LED display may be used. The electronic display 102 is electrically connected to the printed circuit board 100 and thus to the component 101, for example, via conductive tracks on the PCB 100 such that the version information stored on the component 101 can be transferred to the electronic display 102.

In this example, the PCB 100 comprises a processor 103 which reads the version information from the memory of the component 101 and provides it to the electronic display 102. In other examples, the electronic display 102 may be configured to read the version information directly from the component 101 (for example, there may be no need for processor 103). Processor 103 may in some examples sends a command that causes the component 101 to provide the version information of the PCB 100 to the electronic display 102. In other examples the component 101 comprises the processor 103.

The electronic display 102 displays a hardware version information of the PCB 100 and a software version of the PCB 100. The hardware version information may for example be a part number that identifies the particular version of the PCB 100 itself, for example it may identify a particular set of components or a particular layout of components. The software version information may for example indicate the software version of software that is stored in the component 101 or the processor 103 (or other components on the PCB 100) which may be executed by the processor 103 or which may control operation of other equipment. If several programs (softwares) are used or stored on the board, separate version information may be provided, stored and displayed for each.

The PCB 100 includes a communications module 104 which provides a network connection for receiving software updates. This allows the PCB 100 to receive software updates over a local area network or a wide area network, such as the internet.

In this example, the PCB 100 is part of a passenger conveyor system, for example, a part of an elevator system. The passenger conveyor system can obtain software updates over the wide area network or internet and can provide these to the PCB 100 over a local network via the communications module 104. In other examples, the updates are provided directly to the PCB 100 via the communications module 104, for example the communications module 104 provides a wide area network connection, such as an internet connection, to the PCB 100 for receiving software updates.

In this example, version information of the PCB 100 is transferred to the electronic display 102 periodically, for example, every five minutes. In other words, the electronic display 102 is refreshed regularly to ensure that it shows the correct and up-to-date version information. In addition, in this example, if the software of the PCB 100 is updated (and the corresponding software version information is thus also updated), the updated version information is transferred immediately to the electronic display 102 to ensure that it displays the updated software version information as quickly as possible, and in particular without having to wait for the refresh period to elapse. These two update mechanisms (periodic update and immediate/responsive update) can apply separately and individually or they can both be used together.

In this example, the component 101 also stores the date and/or time when the version information of the PCB 100 was last updated. This may include separate dates for when the hardware version information and the software version information of the PCB 100 were last updated. For example, the hardware version information may never be updated while the software version information may be updated regularly as new software updates are applied. This date and/or time information is provided to the electronic display 102 and displayed along with the current PCB 100 hardware version information and software version information.

The electronic display 102 may also display a date of when the version information of the PCB 100 was last provided to the electronic display 102. This may be helpful to indicate that the display is working and whether the information displayed may be relied upon (such as whether the information is up to date and accurate), as the display should receive this information regularly so long as the PCB 100 is powered and/or operational.

The date and/or time information may be provided in any suitable manner. For example, any calendar system may be used, or the information may be encoded as a cumulative time since a certain reference time (for example, as is the case for Julian day number or UNIX timestamps). However, it is preferred that the date and/or time be readily readable and understandable by a human inspector upon quick visual inspection. Thus, the date and/or time in some examples includes a year, month and day and ideally also a time, for example, in the form of an hour and minute (and optionally second). The time may be available from a local clock or it may be provided from any suitable source such as network time, GPS time, etc.

In this example, the PCB 100 is an active safety control system (ASCS) PCB for an elevator system. The active safety control system of an elevator typically consists of several boards in communication with one another. These boards may be positioned, for example, in the elevator car the elevator pit and at the elevator controller. It is typical for the elevator certificate to state a specific hardware and software version for each of these boards.

ASCS PCBs may be routinely inspected to ensure that they have the correct hardware and software versions. These inspections usually require checking of the software version information and/or hardware version information displayed on the PCBs. A PCB 100 according to the examples described here, having an electronic display 102 which is updated by the PCB 100 and which does not require manual re-labelling to provide the correct software version information and/or hardware version information, may be particularly useful for this application.

Figure 2 shows an elevator system 200. The elevator system 200 has an elevator car 201. An ASCS PCB, which may be the PCB 100 shown in Figure 1, is installed within the elevator car 201 (not visible in the Figure 2).

The elevator system 200 also includes a counterweight 202, a tension member 203, a guide rail 204 and an elevator control cabinet 205 comprising an elevator controller. The elevator car 201 and counterweight 202 are connected to each other by the tension member 203. The tension member 203 may include or be configured as, for example, ropes, steel cables, and/or coated-steel belts. The counterweight 202 is configured to balance a load of the elevator car 201 and is configured to facilitate movement of the elevator car 201 concurrently and in an opposite direction with respect to the counterweight 202 within an elevator hoistway and along the guide rail 204. The elevator car 201 may stop at one or more landings 206 as controlled by the controller 205.

A traction machine 207 is configured to control movement of the elevator car 201 and the counterweight 202 by imparting force to tension member 203. The controller 205 may provide drive signals to the machine 207 to control the acceleration, deceleration, levelling, stopping, etc. of the elevator car 201.

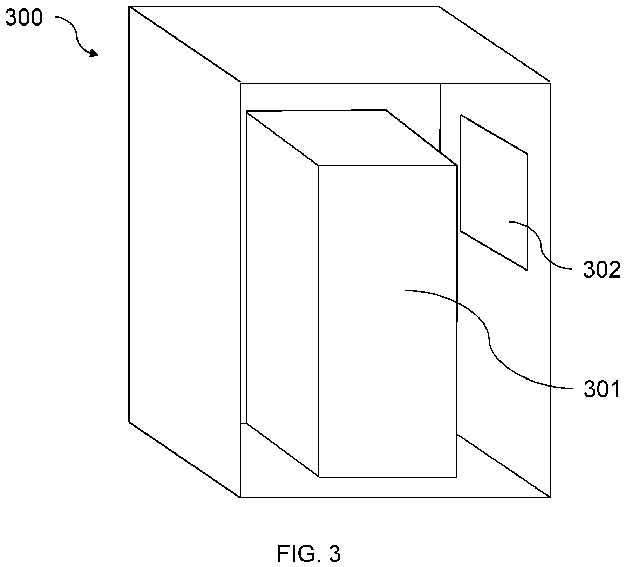

Figure 3 shows the interior of an elevator control cabinet 300, such as the elevator control cabinet 205 shown in Figure 2. The cabinet 300 comprises an elevator controller 301 and a second electronic display 302. In this example, the second electronic display 302 is in communication with an ASCS PCB on the elevator car 201, such as the PCB 100 of Figure 1, over a local network via the controller 301.

The ASCS PCB is arranged to provide the version information (potentially including both hardware version information and software version information) of the ASCS PCB to the display 302, which displays the version information of the ASCS PCB, along with a date of when the version information of the ASCS PCB was updated and a date that the version information of the ASCS PCB was provided to the display 302.

In this example, the second electronic display 302 is an electronic paper display, which is able to display information indefinitely without electricity.

In this example, the controller 301 comprises a controller PCB (which may also have the functionality described in relation to PCB 100), and the electronic system display 302 also displays the version information of the elevator controller PCB, along with a date of when the version information of the elevator controller PCB was updated and a date that the version information of the elevator controller PCB was provided to the display 302.

## Claims

1. A printed circuit board having an electronic display;
wherein the electronic display is electrically connected to the printed circuit board;
wherein the printed circuit board comprises at least one component having version information associated with the printed circuit board stored thereon;
wherein the printed circuit board is arranged to provide the version information to the electronic display; and
wherein the electronic display is arranged to receive and display the version information.

2. The printed circuit board of claim 1, wherein the electronic display comprises electronic paper.

3. The printed circuit board of claim 1 or 2, wherein the version information comprises hardware version information associated with the printed circuit board.

4. The printed circuit board of any one of claims 1 to 3, wherein the version information comprises software version information associated with the printed circuit board.

5. The printed circuit board of claim 4, wherein the printed circuit board is arranged to receive a software update including updated software version information; and optionally
wherein the printed circuit board further comprises a communications module arranged to receive the software update over a network.

6. The printed circuit board of any preceding claim, wherein the printed circuit board is arranged to provide the version information to the electronic display in response to an update of the version information associated with the printed circuit board.

7. The printed circuit board of any preceding claim, wherein the printed circuit board is arranged to provide to the electronic display a date and/or time of when the version information became associated with the printed circuit board; and
wherein the electronic display is arranged to receive and display the date and/or the time of when the version information became associated with the printed circuit board.

8. The printed circuit board of any preceding claim, wherein the electronic display is arranged to display a date and/or time of when the version information associated with the printed circuit board was last received from the printed circuit board.

9. The printed circuit board of any preceding claim, wherein the printed circuit board is a safety critical printed circuit board.

10. The printed circuit board of any preceding claim, wherein the printed circuit board is a passenger conveyor system active safety control system printed circuit board.

11. A passenger conveyor system comprising the printed circuit board of any preceding claim.

12. The passenger conveyor system of claim 11, further comprising a control cabinet;
wherein the control cabinet comprises a second electronic display;
wherein the printed circuit board is arranged to provide the version information to the second electronic display; and
wherein the second electronic display is arranged to receive and display the version information.

13. The passenger conveyor system of claim 12, further comprising a plurality of printed circuit boards;
wherein each printed circuit board of the plurality of printed circuit boards is arranged to provide respective version information to the second electronic display; and
wherein the second electronic display is arranged to receive and display each of the respective version informations.

14. The passenger conveyor system of claim 12 or 13 wherein the second electronic display comprises electronic paper.

15. The passenger conveyor of claim 13 or 14 wherein each of the plurality of printed circuit boards is arranged to provide to the second electronic display a date and/or time of when the respective version information became associated with the respective printed circuit board; and
wherein the second electronic display is arranged to receive and display the date and/or time of when each of the respective version informations became associated with the respective printed circuit board;
and/or
wherein the second electronic display is arranged to display a date and/or time of when each of the respective version informations was last received from the respective printed circuit board.
